# EUROPEAN PATENT SPECIFICATION

(11) **EP 3 056 427 B1**
(45) Date of publication and mention of the grant of the patent: **03.06.2020**
(21) Application number: 15382059.2
(22) Date of filing: 12.02.2015
(51) Int. Cl.: B64C 39/02, A63H 29/16

(54) **Pneumatic drone**
Pneumatische Drohne
Drone pneumatique

(43) Date of publication of application: 17.08.2016
(73) Proprietor: San Jorge Tecnologicas, S.L., 28341 Valdemoro (ES)
(72) Inventor: Del Álamo Lobo, María del Pilar, 28341 Valdemoro (ES); Sanchez Garcia Casarrubios, Juan, 28341 Valdemoro (ES)
(74) Representative: Lorente Berges, Ana

(56) References cited:
- WO-A1-02/10014
- WO-A2-2013/052178
- DE-U1- 20 004 013
- DE-U1- 20 004 013
- US-A- 5 553 454
- US-B1- 6 530 541

## Description

### FIELD OF THE INVENTION

The present application is directed to an unmanned flying vehicle or drone provided with pneumatic propelling means suitable for operation in all kinds of explosive atmospheres zones, wet or dirty environments. It can be used for inspection of ATEX classified facilities or equipment.

### BACKGROUND

The existing ATEX standards classify hazardous areas by gas groups -according to their flammability- and zones -according to the probability of presence of flammable materials- as it can be read for example in the EN 50014 series or in the American standard AEx. Among them, the most hazardous one is zone 0 where an explosive gas-air mixture is continuously present or present for long periods.

Any spark, electrostatic electricity or simply a hot surface can ignite an explosion. Any equipment or device to be operating in an explosive atmosphere must therefore be protected to prevent an explosion. There are quite a few techniques for protection of devices like for example flameproof enclosures, oil immersion, pressurization, powder filling, encapsulation and non-incentive circuits. None of them are permitted in zone 0.

In this zone 0 the only method permitted is "intrinsically safety" and no electric motor is allowed.

Other particularly harsh environments can also be incompatible with the use of electricity. For instance acid or salty fogs tend to corrode electrical insulations creating short-circuits.

Currently existing drones are increasingly used for inspection of facilities, carrying cameras or other sensors and equipment to detect fissures, defects, corrosion and other problems in facilities as for instance that described in US 8874283 B1. However, the use of this kind of drones in quite a few chemical industries and/or ATEX facilities is not possible as their electric motors, batteries and other electronics are not suitable for such hazardous environments. Reliable enough barriers for encapsulation would add an unaffordable weight to flying drones and imposed limits on electric current would require to oversize coils making them too heavy. A naked electric winding would also provide hot surfaces with a probability to ignite explosions. Particularly, zone zero requirements prevent the use of electric motors.

The only protection method available for zero zone is intrinsically safety Ex ia which is based on the limitation of power available for creating a spark in case of failure and intrinsic safety against two simultaneous failures. Document DE 200 04 013 U1 discloses a toy airplane having a horizontal propeller driven by a pneumatic motor actuated by a fluid. The document shows the features of the preamble of claim 1.

### BRIEF DESCRIPTION OF THE FIGURES

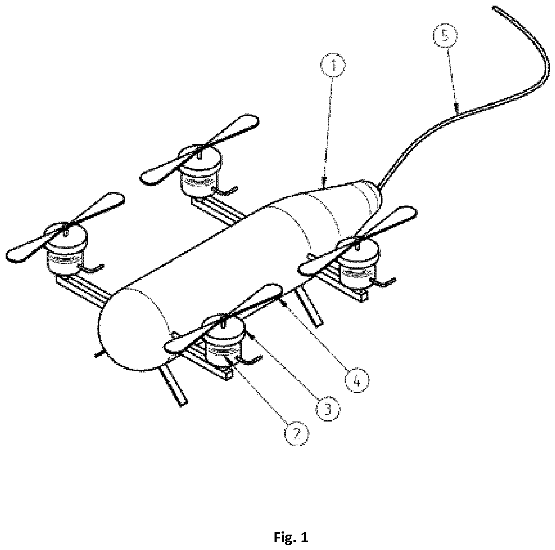

Fig. 1: A preferred embodiment of the present invention is shown consisting of a vehicle body or housing (1), one or more pneumatic motors (2), each one connected to a drive or gear multiplying speed (3), for example by mechanical means, each one connected to a propeller (4). A flexible tether (5) composed of a set of four pneumatic flexible hoses and a number of other flexible wires attached for control and signal transmission provides both compressed air to the pneumatic motors and signals transmission and/or power to the sensors, video camera and any other payload. Pressure controls and interface with operator will be at the other end of the tether.

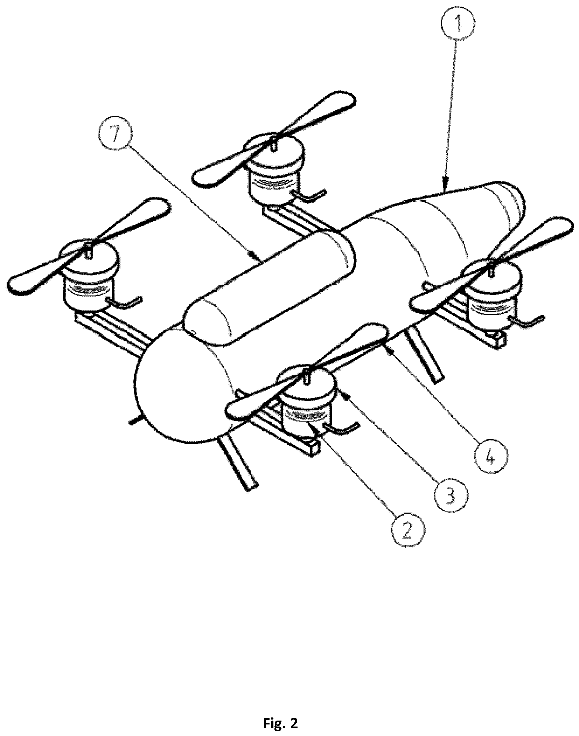

Fig. 2: A second autonomous preferred embodiment of the present invention is shown consisting of a vehicle body or housing (1), one or more pneumatic motors (2), each one connected to a drive or gear multiplying speed (3), each one connected to a propeller (4). A pressure gas reservoir (7) is provided on board to supply gas to the pneumatic motors. As a tether is no longer needed for pneumatic power transmission, this embodiment can be provided with radio signal transmission for signals, command and video transmission. Small sealed electrical batteries will be provided to power any sensor or electronics on board.

### BRIEF DESCRIPTION OF THE INVENTION

EP 2 465 582 A2 describes the possibility of using a compressed air source to provide lift and/or thrust for a drone. According to EP 2 465 582 A2 the compressed air acts in a similar way to a rocket engine or it is channeled through exhaust ports designed to produce lift and/or thrust. The use of the compressed air to directly provide the lift or thrust is however inappropriate for the purposes of the invention because it does not provide sufficient lift or thrust. Such a configuration would require large flows that are not feasible. For example, generating 10 N of lift would require a flow of 1kg/s (i.e. 1m³/s) at an exit speed of 100 m/s! Neither the exit speed required, not the amount of fluid required are practical.

The present invention follows a different approach and provides a drone comprising one or more propelling means driven by pneumatic or compressed air motors. Thus, instead of directly using the elastic energy of a fluid, usually compressed air, to provide lift and/or thrust, the present invention first transforms said elastic energy into kinetic energy by using propelling means actuated by said fluid. For instance, a system providing a moderate pressure between 2 and 10 bar through 1/8" or ¼" pipes will be able to provide quite a few hundred Watt power with relative low losses in quite a few tenths of meters. This is a more efficient way to provide lift and/or thrust and at the same time prevent the formation of sparks and hot areas, which could reach the igniting point of the ambient gases. A well-known kind of pneumatic device are motors or turbines like for example those used by dentists -well known to all the dentists' patients-. Instead of using a propelled gas as direct means of lift and/or thrust, in the present invention a fluid, usually a compressed gas, preferably air, is provided to a set of pneumatic motors connected to one or more propelling means, typically propellers, preferably through a multiplier or drive multiplying the speed of the propelling means with respect to the speed of the motor. The vehicle can be provided with at least one motor and one propelling means. Thus, the fluid actuates on the pneumatic motor and it is not used directly for propelling. This configuration provides the lift and/or thrust required to operate the vehicle and all the equipment it carries.

A "pneumatic" system according to the present invention is understood as a system actuated by a compressed fluid. Said fluids can be liquids, for example water, and thus includes hydraulic systems. According to an embodiment of the invention, the fluid is water and thus the pneumatic motor is a hydraulic motor. According to an alternative embodiment, the fluid is a compressed gas.

In an embodiment, the compressed gas can be supplied from a gas reservoir or from a compressor through a set of flexible hoses. Control of stability can be achieved using pressure controls located at the other end of the hose. A well-known automatic close control loop can be established controlling the mentioned pressure actuators or alternatively using electro-valves. As the mentioned electro valves are located at the end of the tether where the operator is located, their weight is not a practical problem and they can even be protected at a certain degree. The location of the operator, electro valves, compressor and any other equipment like computers or data acquisition cards that can be used to improve or control de system will be outside the hazardous or harsh area.

In an embodiment of the invention, the compressed air can be the gas used for the system as the cheapest option. Indeed, other gases can also be used to increase safety. For instance, an inert gas like nitrogen could be used. The residual flow after driving the pneumatic motor could be directed towards the inner part of the vehicle body to provide an inert gas inside.

The skilled person can provide further embodiments according to the specifics needs of each situation. For instance, a fuel gas could be a good option for operation in a deposit or room where an atmosphere with such a gas exists. It has to be noted that an excess of fuel is as effective to suppress fire as the absence of it. These are the two well-known flammability limits. Additionally, the use of the same fuel as the existing in the area where the vehicle is operating will not pollute the place more than it was previously.

Preferred sensors to be on board of the vehicle to improve navigation are a light interferometry Gyroscope and a video camera with a wide field lens. Preferably both, video and gyroscope signals, will be transmitted through a flexible cable attached or integrated to the tether.

The main advantage of such an invention is that it can be used for instance to enter in zone 0 areas while the operator and controller remain outside in a less hazardous zone. Electronics, electric pressure controls, electro valves and the like can be then be used to control the pressure in each hose and therefore the speed of the propelling means.

The tether will be preferably composed of a number hoses equal to that of pneumatic motors and to the number of propelling means. Additionally some electronics wires fulfilling the well-known intrinsic safety requirements can also provide power supply to the video and sensors and/or transmit data to and fro.

This first option of the invention avoids the use of any electric motor or component (even valves or solenoid) on board of the vehicle itself. A second alternative embodiment of the invention is provided with a gas reservoir (or a set of them) on board to provide the pneumatic power to the pneumatic motors. The reservoir may be just of compressed gas or liquefied gas like the well-known CO₂ bottles used for paintball guns. In this case the automatic control of the system can be obtained by means of mechanical conventional devices as the Watt regulation mechanism or by the actuation of a set of valves suitable for the conditions of the operations area by any known method of protection. In this sense, the use of nitrogen, CO₂ or any other inert gas for the pneumatic motion, can provide an easy way to conduct the outgoing inert gas flow into the valves or vehicle body, therefore protecting the system.

In this second embodiment, radio control can be used as in conventional drones provided that a protection is used according to the level required for the operation area. Although this second embodiment may not be usable for zone 0 it will be for other less restrictive zones, with the great advantage of versatility for being free of any tether.

### DETAILED DESCRIPTION OF THE INVENTION

A preferred embodiment of the present invention consist in a vehicle body (1) and a set of preferably four pneumatic motors (2) attached to it. Each pneumatic motor (2) is mechanically connected to a multiplier gear (3) connected to a propeller. It is provided with a tether (5) composed of four pneumatic flexible hoses and a transmission wire for sensors and/or video on board of the vehicle.

The pneumatic hoses provide pneumatic power at pressures of some bar and low air flow. The sets of motors/multiplying drive/propelling means convert this pneumatic power into kinetic energy of a created vertical air flow that provides the required thrust. No electric components are used in the vehicle for thrust. This makes it suitable for zone 0.

All controls, preferably using a close loop and electro valves or pressure controls, as well as an air compressor or gas reservoir will be at the other end of the tether -outside the zone 0. To improve the flexibility of the tether and to reduce the mechanical constraints transmitted through the tether a set of particularly more flexible joints joining a set of sectors. These flexibility can be achieved by below-like or by spring configurations.

A second alternative embodiment of the invention is provided with a gas reservoir (or a set of them) on board to provide the pneumatic power to the pneumatic motors. The reservoir may be just of compressed gas or liquefied gas like the well-known CO₂ bottles used for paintball guns. In this case the automatic control of the system can be obtained by means of mechanical conventional devices as the Watt regulation mechanism or by the actuation of a set of valves suitable for the conditions of the operations area by any known method of protection. In this sense, the use of nitrogen, CO₂ or any other inert gas for the pneumatic motion, can provide an easy way to conduct the outgoing inert gas flow into the valves or vehicle body, therefore protecting the system.

In this second embodiment, radio control can be used as in conventional drones provided that a protection is used according to the level required for the operation area. Although this second embodiment may not be usable for zone 0 it will be for other less restrictive zones, with the great advantage of versatility for being free of any tether.

## Claims

1. An unmanned flying vehicle comprising one or more propellers (4), wherein the propellers (4) are connected to one or more driving pneumatic motors (2) adapted to be actuated by a fluid, **characterized in that**
- each pneumatic motor (2) is mechanically connected to a multiplier gear (3) that, in turn, is connected to a propeller (4), such that the multiplier gear (3) multiplies the speed of the propeller (4) with respect to the speed of the motor (2); and **in that**
- each set of motor (2), multiplying gear (3) and propeller (4) is configured for creating a vertical air flow providing lift for the flying vehicle.

2. The flying vehicle according to claim 1, wherein the propellers (4) and the pneumatic motors (2) are configured to avoid generation of sparks or areas having a temperature equal to or above an igniting point of ambient gases where the flying vehicle can be operated.

3. The flying vehicle according to any of the previous claims wherein the fluid is a compressed gas.

4. The flying vehicle according to claim 3, wherein the gas is air.

5. The flying vehicle according to any of the previous claims comprising one or more compressed and/or liquefied gas reservoirs (7) providing gas pressure to the pneumatic motors (2).

6. The flying vehicle according to any of the previous claims, comprising a system for radio transmission of signal and control.

7. The flying vehicle of any of claims 1 to 4 comprising a tether (5) connected on a first end to the flying vehicle, the tether (5) comprising a set of hoses or flexible pipes providing independently controlled fluid to the pneumatic motors (2).

8. The flying vehicle of claim 7 comprising one or more pressure controllers and one or more compressed gas supplies at a second end of the tether (5).

9. The flying vehicle according to any of claims 7 or 8 wherein the tether (5) is at least partially coiled throughout a set of sections.

10. The flying vehicle according to any of claims 7, 8 or 9 wherein the tether (5) comprises one or more bellows or joints adapted to allow free relative rotation of sections.

11. The flying device of any of the previous claims comprising a tether-cable for the transmission of video or any kind of signals from sensors to an operator or for the transmission of any kind of signals to actuators from the operator.

## Patentansprüche

1. Ein unbemanntes fliegendes Fahrzeug, bestehend aus einem oder mehreren Propellern (4), wobei die Propeller (4) mit einem oder mehreren pneumatischen Antriebsmotoren (2) verbunden sind, die für die Betätigung durch eine Flüssigkeit geeignet sind und sich dadurch auszeichnen, dass
- jeder Pneumatikmotor (2) mechanisch mit einem Multiplikatorgetriebe (3) verbunden ist, das wiederum mit einem Propeller (4) verbunden ist, so dass das Multiplikatorgetriebe (3) die Geschwindigkeit des Propellers (4) in Bezug auf die Geschwindigkeit des Motors (2) multipliziert; und dadurch, dass
- jeder Satz aus Motor (2), Multiplikationsgetriebe (3) und Propeller (4) so konfiguriert ist, dass ein vertikaler Luftstrom entsteht, der das fliegende Fahrzeug anhebt.

2. Das fliegende Fahrzeug gemäß Anspruch 1, wobei die Propeller (4) und die Pneumatikmotoren (2) so konfiguriert sind, dass keine Funken oder Bereiche entstehen, deren Temperatur die eines Zündpunkt von Umgebungsgasen erreicht oder übersteigt, bei dem das fliegende Fahrzeug betrieben werden kann.

3. Das fliegende Fahrzeug gemäß einem der vorherigen Ansprüche, wobei die Flüssigkeit ein komprimiertes Gas ist.

4. Das fliegende Fahrzeug gemäß Anspruch 3, wobei das Gas Luft ist.

5. Das fliegende Fahrzeug gemäß einem der vorherigen Ansprüche, bestehend aus einem oder mehreren verdichteten und/oder verflüssigten Gasspeichern (7), die den Pneumatikmotoren (2) Gasdruck verleihen.

6. Das fliegende Fahrzeug gemäß einem der vorherigen Ansprüche, bestehend aus einem System für die Funkübertragung von Signal und Steuerung.

7. Das fliegende Fahrzeug eines der Ansprüche 1 bis 4, bestehend aus einem Haltegurt (5), der an einem ersten Ende mit dem fliegenden Fahrzeug verbunden ist, wobei der Haltegurt (5) aus einem Satz von Schläuchen oder flexiblen Rohren besteht, die die Pneumatikmotoren (2) unabhängig gesteuert mit Flüssigkeit versorgen.

8. Das fliegende Fahrzeug des Anspruchs 7, bestehend aus einem oder mehreren Druckreglern und einer oder mehreren Druckgasversorgungen an einem zweiten Ende des Haltegurts (5).

9. Das fliegende Fahrzeug gemäß eines der Ansprüche 7 oder 8, wobei der Haltegurt (5) mindestens teilweise in einer Reihe von Abschnitten aufgewickelt ist.

10. Das fliegende Fahrzeug gemäß eines der Ansprüche 7, 8 oder 9, wobei der Haltegurt (5) einen oder mehrere Faltenbälge oder Verbindungen enthält, die geeignet sind, eine freie relative Drehung der Abschnitte zu ermöglichen.

11. Das fliegende Gerät eines der vorherigen Ansprüche, bestehend aus einem Gurtkabel zur Übertragung von Video oder jeglicher Art von Signalen von Sensoren an einen Bediener oder zur Übertragung jeglicher Art von Signalen vom Bediener an Auslöser.

## Revendications

1. Un véhicule volant sans pilote comprenant une ou plusieurs hélices (4), dans lequel les hélices (4) sont connectées à un ou plusieurs moteurs pneumatiques d'entraînement (2) adaptés pour être actionnés par un fluide, **caractérisé en ce que**
- chaque moteur pneumatique (2) est relié mécaniquement à un engrenage multiplicateur (3) lui-même relié à une hélice (4), de telle sorte que l'engrenage multiplicateur (3) multiplie la vitesse de l'hélice (4) par rapport à la vitesse du moteur (2) ; et **en ce que**
- chaque unité constituée par un moteur (2), un engrenage multiplicateur (3) et une hélice (4) est configurée pour créer un flux d'air vertical permettant d'élever le véhicule volant.

2. Le véhicule volant conformément à la revendication 1, dans laquelle les hélices (4) et les moteurs pneumatiques (2) sont configurés de façon à éviter la génération d'étincelles ou de zones ayant une température égale ou supérieure à un point d'inflammation des gaz ambiants à l'endroit où le véhicule volant peut être utilisé.

3. Le véhicule volant selon l'une quelconque des revendications précédentes dans laquelle le liquide est un gaz comprimé.

4. Le véhicule volant selon la revendication 3, où le gaz est l'air.

5. Le véhicule volant selon l'une quelconque des revendications précédentes comprenant un ou plusieurs réservoirs de gaz comprimé et/ou liquéfié (7) fournissant une pression de gaz aux moteurs pneumatiques (2).

6. Le véhicule volant selon l'une quelconque des revendications précédentes, comprenant un système de transmission radio du signal et de la commande.

7. Le véhicule volant de l'une quelconque des revendications 1 à 4 comportant une attache (5) reliée à une première extrémité au véhicule volant, l'attache (5) comprenant un ensemble de flexibles ou de tuyaux flexibles fournissant du liquide contrôlé indépendamment aux moteurs pneumatiques (2).

8. Le véhicule volant de la revendication 7 comprenant un ou plusieurs manettes de pression et une ou plusieurs alimentations en gaz comprimé à une deuxième extrémité de l'attache (5).

9. Le véhicule volant selon l'une quelconque des revendications 7 ou 8 où l'attache (5) est enroulée au moins partiellement au travers d'un ensemble de sections.

10. Le véhicule volant selon l'une quelconque des revendications 7, 8 ou 9 où l'attache (5) comporte un ou plusieurs soufflets ou joints adaptés pour permettre une rotation relative libre des sections.

11. Le dispositif volant de l'une quelconque des revendications précédentes comprenant un câble d'attache pour la transmission de signaux vidéo ou autres des capteurs à un opérateur ou pour la transmission de tout type de signaux aux actionneurs de l'opérateur.
